Europäisches Patentamt

European Patent Office

Office européen des brevets

(11) Publication number: **0 483 464 A1**

# EUROPEAN PATENT APPLICATION

(21) Application number: **91112978.1**

(22) Date of filing: **01.08.91**

(51) Int. Cl.5: **F16C 35/077**

(30) Priority: **31.10.90 IT 6786090**

(43) Date of publication of application:
**06.05.92 Bulletin 92/19**

(84) Designated Contracting States:
**DE FR GB SE**

(71) Applicant: **SKF INDUSTRIE S.P.A.**
**Corso Vittorio Emanuele II No. 48**
**I-10123 Torino(IT)**

(72) Inventor: **Maselli, Vito Carlo**
**Via Guido Dorso, 4**
**I-70026 Modugno(IT)**

(74) Representative: **Cerbaro, Elena et al**
**c/o Studio Torta, Via Viotti 9**
**I-10121 Torino(IT)**

(54) **A rolling element bearing mountable with freedom of axial movement, provided with a device for resisting accidental rotation.**

(57) A rolling element bearing (1) intended to be mounted axially movably with respect to a seat (2) therefor is provided with a device for countering accidental relative rotation between the seat and the bearing (creeping) consisting of a radially deformable elastic annular element (12) fitted with radial clearance in a respective annular groove (14) of the bearing facing the said seat; this annular element (12) has, in the undeformed condition, dimensions such as to cause, in use, interference with the seat (2) by a predetermined amount, for example, 2-3 tenths of a millimetre, thereby causing elastic locking of the bearing (1) against rotation in the seat (2), which however allows relative axial displacement between the bearing and the seat.

Fig.1

Fig.2

The present invention relates to a rolling element bearing of the type which can be mounted in a seat defined by a shaft or by a support with freedom of axial movement whereby to allow differential thermal expansion to take place between the elements in relative motion coupled thereby.

It is known that whatever the type of mounting that bearings have, for example for the support of a shaft with respect to a support, it must be arranged for at least one radial bearing to be left axially unconstrained whereby to permit elongation of the shaft by thermal expansion without inducing internal tensions on the shaft itself. For this purpose, for example, the coupling between the seat and the outer ring of the bearing is made with a small clearance in such a way as to leave the bearing the possibility of displacing axially in the seat together with the shaft. In particular loading conditions, however, axially unconstrained bearings may experience the phenomenon of so-called "creeping" in which the bearing (in the specific example the outer ring) is stressed to rotate relative to the seat which it is coupled; this rotation, once initiated, causes an irregular wear of the seat with the consequent commencement initiation of eccentric movements which rapidly wear the seat, in particular if, as in the case of cylinder heads and some electric motor casings, this is made of a light alloy.

To obviate this disadvantage it has been proposed to provide a bearing having an anti-rotation device consisting of a ring of variable thickness inserted within an annular groove of variable depth in the outer ring; the ring is mounted in the groove in such a way as to project slightly but, nevertheless in such a way as not to give rise to interference and, once in use, the vibrations cause it to protrude partially from the groove with the consequent creation of an interference which causes a jamming of the ring against the seat with consequent locking against possible accidental rotations. Such a system, however, is expensive in that it requires complex working to form the groove and the ring to a variable height, is not entirely secure, can destroy the bearing seat and, if the ring is displaced in the groove before assembly of the bearing to the seat, can cause interference which impedes the mounting of the bearing.

The object of the invention is that of providing a bearing having an anti-rotation device which is simple and economic to produce and which will be reliably effective.

The said object is achieved by the invention which relates to a rolling element bearing of the type adapted to be mounted with freedom of axial movement relative to a seat therefor, the bearing being provided with a device adapted to impede accidental relative rotation between the seat and the bearing, characterised by the fact that the said device includes a radially deformable elastic annular element fitted with radial clearance in a respective annular groove of the bearing facing the said seat; the said annular element having, in an undeformed condition, dimensions such as to be adapted to interfere with the said seat by a predetermined amount consequently to cause elastic locking of the bearing in the seat against rotation and, simultaneously, to allow relative axial displacements between the bearing and the seat.

For a better understanding of the invention, a non-limitative description of an embodiment thereof is now given with reference to the attached drawings, in which:

Figure 1 illustrates a bearing formed according to the invention mounted on the end of a shaft; and

Figure 2 illustrates a detail of the bearing of Figure 1 on an enlarged scale.

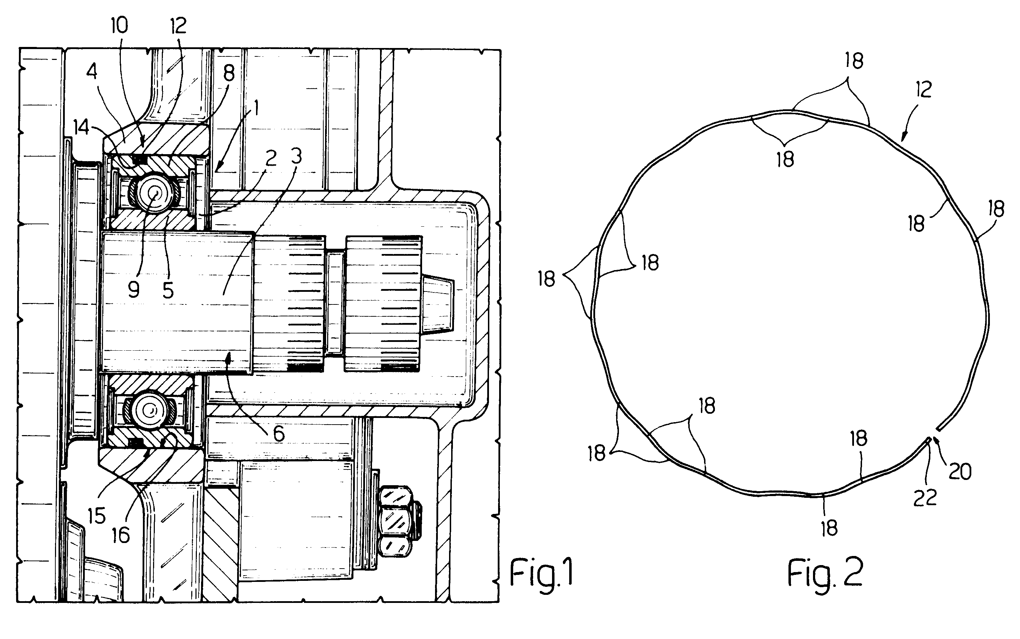

With reference to Figures 1 and 2, the reference numeral 1 generally indicates a rolling element bearing adapted to be mounted in a seat 2 to render two mechanical members relatively rotatable with low friction; in the specific example the two mechanical members are a shaft 3 and a support 4 of any mechanical device. The bearing 1 comprises an inner ring 5 fitted to the shaft 3 and fixed thereto against angular and axial movement, for example by being an interference fit on a lateral outer surface 6, an outer ring 8 mounted in the seat 2 coaxial therewith and with the ring 5, and a plurality of rolling bodies 9 interposed between the rings 5 and 8. The ring 8 can be mounted in the seat 2 with a slight clearance in such a way as to be coupled for rotation, by friction, with the support 4, but likewise free to move axially in the seat 2 with respect to the support 4 itself, for example to follow the small axial displacements of the shaft 3 due to differential thermal expansions to which this is subjected in use with respect to the support 4.

In such conditions, if the load acting on the bearing 1 transmits to the ring 8 a couple greater than the frictional couple this can be subject to the so called phenomenon of "creeping" consisting essentially in a progressive wear of the seat 2 due to the relative rotation with respect to this and to the support 4 of the ring 8.

In order to avoid the said phenomenon the bearing 1 is provided with a device 10 adapted suitably to impede accidental relative rotation between the seat 2 and the bearing 1, in the specific example between the seat 2 and the ring 8. According to the invention the device 10 includes a radially deformable elastic annular element 12 illustrated in Figure 2, which is fitted with radial clearance into a respective annular groove 14 of the bearing 1 facing the seat 2; this annular element 12 is, according to the invention, adapted to cause elastic locking of the bearing 1 against rotation within the seat 2 and, simultaneously, to allow relative axial displacements between the bearing 1 and the seat 2. For this purpose the element 12 is shaped in such a way as to have, in undeformed conditions, dimensions such as to be adapted to interfere in use with the seat 2 by a predetermined amount.

In particular, the annular groove 14 is formed on an outer lateral surface 15 of the outer ring 4, or rather on that surface of the ring intended to co-operate with the seat 2 which in use co-operates with this latter; in this way the groove 14, in use, faces a lateral wall 16 of the seat 2. The elastic annular element 12 (Figure 2) is on the other hand defined by a ring provided with a plurality of alternating adjacent radial undulations 18 and a radial split 20 which, together with the presence of the undulations 18, permits the element 12 to spring in a radial sense, springing movement of the rest allowed in use also by the groove 14 just where the element 12 is lodged with radial clearance.

According to the non-limitative embodiment illustrated, the annular elastic element 12 is defined by a piece of metal wire 22 of round section which is plastically deformed in such a way as to obtain, in an axial sense, the alternating undulations 18 and is then, again by plastic deformation, bent into a ring. According to another possible embodiment, not illustrated for simplicity, the annular elastic element 12 is on the other hand defined by a piece of sheet metal have axial undulations and bent into a ring. The diameter to which the element 12 is formed, as well as the amplitude of the undulations 18 formed thereon, determine the magnitude of the interference with the seat 2 which, in use, is preferably established in the order of two or three tenths of a millimetre.

When the element 12 is mounted in the groove 14 it is disposed with the undulations 18 slightly projecting from the groove itself; this does not impede or render difficult the subsequent mounting of the bearing 1-device 10 assembly in the seat 2 in that, as already mentioned, the undeformed dimensions of the element 12 are such that the interference with the seat 2 is minimal and, moreover, in that the ring 12 is elastic, so that during the mounting phase it deforms both in a radial and a circumferential sense, for example as allowed by of the width of the split 20, entering completely into the groove 14. This deformation is in part recovered when the bearing 1 is arranged in the seat 2, in that it is, as mentioned, housed with slight radial clearance, and in part this converts into an elastic reaction thrust which causes the element 12, when the bearing 1 is in use, in reality to co-operate with the seat 2 with zero clearance and by exercising on the surface 16 thereof also a radial pressure of predetermined magnitude which consequently causes a certain adhesion force, by friction, between the bearing 1-device 10 assembly and the seat 2. This pressure and, consequently, this force, can be established during the design stage by suitable dimensions of the element 12.

As experimental tests conducted by the applicant have demonstrated, the action of the element 12 described converts into a secure fixing of the bearing 1 in the seat 2, against rotation at least in normal load conditions to which the bearing 1 is intended to be subjected, so that the phenomenon of "creeping" with consequent wear of the seat is completely avoided. Simultaneously, however, the element 12 does not interfere with possible relative axial movements between the bearing 1 and the seat 2, so that the bearing 1 is left axially unconstrained and therefore able to compensate differential thermal expansions between the shaft 3 and the support 4 by means of slight axial displacements within the seat 2.

From what has been described the advantages associated with the invention will be evident; the anti rotation device with which the bearing of the invention is provided is in fact extremely simple to construct and assemble, and therefore has a low industrial cost; it is however of great effectiveness and because its action is based on elasticity it is not subjected in use to obstructions or jamming in the seat and therefore avoids the risk of destruction thereof.

**Claims**

1. A rolling element bearing of the type adapted to be mounted with freedom of axial movement relative to a seat (2) therefor, the bearing being provided with a device operable to impede accidental relative rotation between the seat and bearing, characterised by the fact that the said device comprises a radially deformable elastic annular element (12) fitted with radial clearance in a respective annular groove (14) of the bearing facing the said seat (2); the said annular element having when undeformed, dimensions such as to be adapted to interfere with the said seat by a predetermined amount whereby consequently to determine an elastic locking of the bearing (1) against rotation in the seat (2) and, simultaneously, to allow relative axial displacements between the bearing and the seat.

2. A rolling element bearing according to Claim 1, of the type comprising an outer ring and an inner ring between which are interposed rolling bodies, characterised by the fact that the said annular groove (14) is formed on a surface (15) of that of the said rings coupled to the said seat (2) which is intended to co-operate with this latter, in such a way that the groove faces a side wall (16) of the seat.

3. A rolling element bearing according to Claim 1 or Claim 2, characterised by the fact that the said elastic annular element is defined by a ring provided with a plurality of adjacent radial undulations (18) and a radial split (20) which, together with the said undulations, permit elastic radial movement thereof.

4. A rolling element bearing according to Claim 3, characterised by the fact that the said elastic annular element (12) is defined by a piece of round metal wire (22) axially corrugated and bent in a ring.

5. A rolling element bearing according to Claim 3, characterised by the fact that the said elastic annular element (12) is defined by a piece of metal strip axially corrugated and bent in a ring.

6. A rolling element bearing according to Claim 4 or Claim 5, characterised by the fact that the said elastic annular element (12) has a diameter and a width of corrugations (18) such as to cause, in use. interference with the said seat (12) of the order of two to three tenths of a millimetre.

Fig.1

Fig. 2

EP 0 483 464 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 019 475 (SMITH) <br> * the whole document * <br> --- | 1,2,3,5 | F16C35/077 |
| X | FR-A-2 073 198 (NIPPON SEIKO) <br><br> * the whole document * <br> --- | 1,2,3,4,6 | |
| X | US-A-4 545 627 (NAKAMURA) <br> * the whole document * <br><br> ----- | 1,2,3,4 | |

TECHNICAL FIELDS SEARCHED (Int. Cl.5)

F16C

The present search report has been drawn up for all claims

| Place of search | Date of completion of the search | Examiner |
|---|---|---|
| THE HAGUE | 17 FEBRUARY 1992 | ORTHLIEB C.H.E. |